Europäisches Patentamt

European Patent Office

Office européen des brevets

(11) Numéro de publication: **0 198 724 B1**

(12) # FASCICULE DE BREVET EUROPÉEN

(45) Date de publication du fascicule du brevet:
12.07.89

(21) Numéro de dépôt: 86400240.7

(22) Date de dépôt: 05.02.86

(51) Int. Cl.⁴: **G 01 P 15/125,** G 01 P 15/13

(54) Accéléromètre micro-usiné à rappel électrostatique.

(30) Priorité: 16.04.85 FR 8505690

(43) Date de publication de la demande:
22.10.86 Bulletin 86/43

(45) Mention de la délivrance du brevet:
12.07.89 Bulletin 89/28

(84) Etats contractants désignés:
CH DE GB IT LI NL SE

(56) Documents cité:
DE-A-3 306 813
GB-A-2 076 970
GB-A-2 069 991
US-A-2 976 734
US-A-3 877 313

(73) Titulaire: **SOCIETE FRANCAISE D'EQUIPEMENTS POUR LA NAVIGATION AERIENNE (S.F.E.N.A.), B.P. 59 Aérodrome de Villacoublay, F-78141 Velizy Villacoublay Cédex (FR)**

(72) Inventeur: **Boura, André, 5, rue Aliénor d'Aquitaine, F-86100 Chatellerault (FR)**

(74) Mandataire: **Marquer, Francis, Cabinet Moutard 35, Avenue Victor Hugo, F-78960 Voisins le Bretonneux (FR)**

EP 0 198 724 B1

LIBER, STOCKHOLM 1989

## Description

La présente invention concerne un accéléromètre utilisant un capteur accélérométrique à structure pendulaire plane du type de celles qui se trouvent décrites dans la demande de brevet européen No 85400329.0 déposée le 22 Février 1985 au nom de la Demanderesse, qui appartient à l'état de la technique tel que défini à l'article 54 (3) de la CBE.

On rappelle que selon ladite demande, cette structure pendulaire est réalisée par micro-usinage d'un substrat consistant en une fine plaquette de quartz (ou autre monocristal) et par dépôt sous vide de surfaces conductrices judicieusement disposées. Elle comprend une masse mobile plate (ou corps d'épreuve) suspendue au reste de la structure par l'intermédiaire de deux lames minces parallèles situées de part et d'autre de ladite masse.

Ces lames de suspension ont pour épaisseur l'épaisseur du substrat et sont extrêmement étroites. Elles permettent à la masse mobile de se déplacer en translation dans une direction parallèle au plan du substrat en n'opposant qu'une faible force de rappel élastique, de sorte que l'axe sensible du capteur est situé dans le plan du substrat.

Ces lames de suspension portent des conducteurs assurant la continuité électrique entre des plages métallisées liées à la masse mobile et des zones de raccordement situées sur la partie fixe du substrat.

Par ailleurs, ladite demande propose, pour l'asservissement du capteur, un moteur de rappel utilisant la force de Laplace obtenue par l'action d'une induction magnétique sur un courant circulant dans au moins une bobine imprimée sur l'une des faces de la masse mobile.

Il est clair que cette solution, en plus du fait qu'elle nécessite la réalisation de la bobine, fait intervenir un circuit magnétique comprenant habituellement un aimant permanent associé à des pièces polaires situées d'un côté de la masse mobile, au droit de la bobine, et une armature de rebouclage du flux disposée de l'autre côté de ladite masse. En outre, il est nécessaire de réaliser des connexions délicates entre la bobine et les plages de connexion ou les circuits électroniques situés sur la partie fixe de la structure pendulaire, ces connexions étant formées par des couches conductrices disposées sur les lames de suspension.

D'autres solutions ont été également proposées pour la réalisation de capteurs accélérométriques. Ainsi, par exemple, le brevet GB-A-2 101 336 décrit un accéléromètre capacitif dans lequel le corps d'épreuve, plat, est monté basculant sur une partie fixe au moyen d'éléments de torsion.

L'invention a plus particulièrement pour but la réalisation d'un accéléromètre comprenant un capteur accélérométrique de type similaire à celui décrit dans la susdite demande, mais utilisant une motorisation et des moyens d'asservissement d'un type mieux approprié pour obtenir une réalisation simplifiée de l'ensemble, qui soit moins volumineuse et moins coûteuse, et qui permette une très haute miniaturisation.

A cet effet, l'accéléromètre selon l'invention utilise au moins un capteur accélérométrique à structure pendulaire comprenant une partie fixe présentant au moins une armature fixe de condensateur, une masse mobile plate suspendue à la partie fixe par l'intermédiaire de deux lames minces parallèles situées de part et d'autre de ladite masse, cette masse mobile portant au moins une armature mobile de condensateur en regard de l'armature fixe et des moyens permettant d'appliquer une tension sur lesdites électrodes de manière à engendrer, sur la masse mobile, une force de rappel électrostatique.

Cet accéléromètre est plus particulièrement caractérisé en ce que la structure pendulaire est plane, monobloc et est réalisée par micro-usinage d'un substrat consistant en une fine plaquette de monocristal, en ce que ladite masse mobile comprend, sur au moins une portion de sa tranche, une métallisation constituant ladite armature mobile, en ce que ladite partie fixe comprend, sur au moins deux portions distinctes de sa tranche, deux métallisations respectives constituant deux armatures fixes de condensateur disposées de part et d'autre de l'armature mobile, et en ce que l'armature mobile est portée à une première tension $V_0$, tandis que les arma-tures fixes sont respectivement portées à une deuxième et une troisième tensions $V_1$ et $V_2$ qui sont susceptibles d'engendrer la susdite force de rappel électrostatique.

Grâce à la structure précédemment décrite, cette force de rappel électrostatique sera alors de la forme:

$$F_R = \frac{\varepsilon_0}{2} S \left[ \frac{(V_1 - V_0)^2}{(e - x)^2} - \frac{(V_2 - V_0)^2}{(e + x)^2} \right]$$

formule dans laquelle:

$\varepsilon_0$ est la constante diélectrique,

S est la surface en regard des armatures,

e est la distance moyenne entre l'armature mobile et les armatures fixes,

x est le déplacement relatif de la masse mobile.

A partir de la structure précédemment décrite, la mesure de l'accélération détectée par le capteur accélérométrique peut être effectuée par l'une des deux solutions suivantes:

La première solution consiste à asservir les écarts $(V_1 - V_0)$ et $(V_2 - V_0)$ de telle manière que:

$V_1 - V_0 = k (e - x)$
$V_2 - V_0 = k (e + x)$
k étant un coefficient de valeur constante résultant d'un réglage, et à mesurer l'écart de tension $V_2 - V_1$ qui est proportionnel à l'écart de position de la masse mobile et, en conséquence, à l'accélération apparente en régime permanent.

La deuxième solution consiste à asservir la masse mobile en position, grâce aux tensions $V_0$, $V_1$ et $V_2$ et à mesurer la force de rappel $F_R$ nécessaire.

Des modes d'exécution de l'invention seront décrits ci-après, à titre d'exemples non limitatifs, avec référence aux dessins annexés dans lesquels:

La figure 1 est un schéma de principe de la structure d'un capteur accélérométrique selon l'invention;

La figure 2 est une vue partielle en perspective à plus grande échelle du capteur accélérométrique de la figure 1, dans lequel on a représenté le détail des métallisations;

La figure 3 est un schéma électrique permettant d'illustrer le principe de fonctionnement de l'accéléromètre selon l'invention;

La figure 4 est une vue schématique d'un accéléromètre deux axes ou inclinomètre obtenu à l'aide de deux capteurs accélérométriques du type de celui de la figure 1, usinés sur un même substrat,

La figure 5 est le schéma d'un autre mode d'exécution d'un accéléromètre deux axes utilisant trois capteurs accélérométriques.

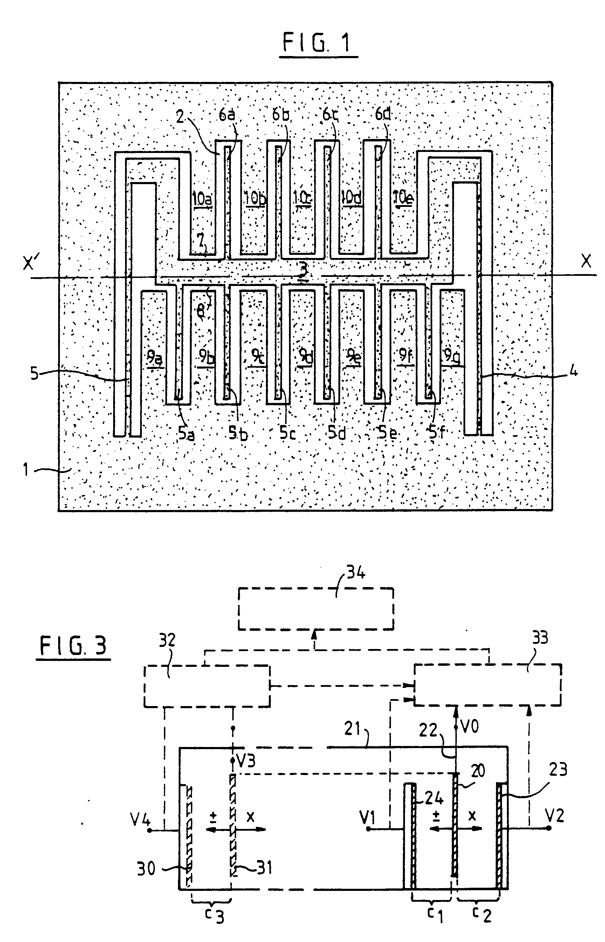

Tel que représenté sur la figure 1, le capteur accélérométrique est réalisé à partir d'un substrat consistant en une fine plaquette 1 ou un monocristal, tel que du quartz, à l'intérieur de laquelle ont été réalisées des découpes 2, délimitant une masse mobile constituée par une poutre porteuse 3 suspendue élastiquement au reste de la plaquette 1 par l'intermédiaire de deux lames minces 4, 5 qui présentent la même épaisseur que le substrat et sont relativement étroites.

Cette poutre 3 peut donc se déplacer en translation selon un axe sensible X'X perpendiculaire aux lames minces 4, 5. Par ailleurs, elle porte une succession de dents de détection et de rappel 5a à 5f et 6a à 6d qui s'étendent perpendiculairement à l'axe sensible X'X à partir de ses deux bordures longitudinales 7, 8. Ces dents s'engagent dans des évidements de formes sensiblement complémentaires de la partie fixe du substrat, qui délimitent une succession de dents fixes 9a à 9g et 10a à 10e venant s'intercaler entre les dents mobiles 5a à 5f et 6a à 6d de la poutre 3.

Les tranches des dents mobiles 5a à 5f et 6a à 6d qui sont métallisées forment, avec les tranches des dents fixes 9a à 9g et 10a à 10e, également métallisées, des capacités dont l'entrefer varie directement avec le déplacement relatif de la poutre porteuse 3 (les unes augmentant alors que les autres diminuent et vice versa).

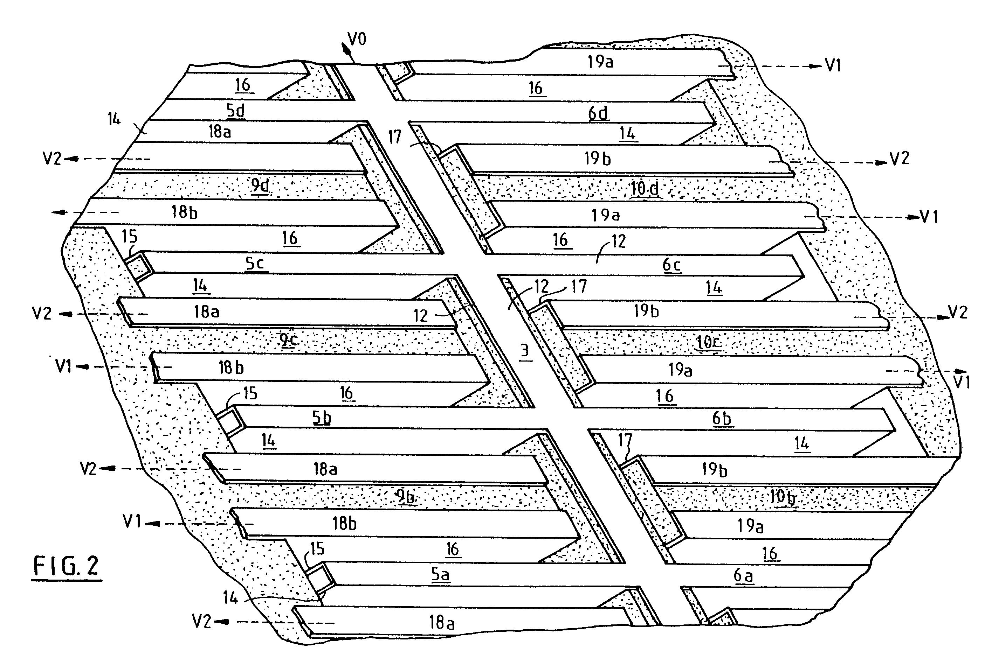

La figure 2 montre le détail des métallisations réalisées sur le capteur accélérométrique. Dans cet exemple, la poutre porteuse 3 est recouverte, au moins au niveau de l'une de ses faces latérales, par une couche conductrice 12, qui s'étend également sur la face latérale correspondante des dents 5a à 5f et 6a à 6d.

D'une façon analogue à celle décrite dans la demande mentionnée, cette couche conductrice 12 est électriquement reliée à des plages de connexion prévues sur la partie fixe du substrat, au moyen de couches conductrices formées sur les faces minces des lames souples 4, 5.

Par ailleurs, les tranches des dents mobiles sont recouvertes par des métallisations 14, 15 prolongeant, à angle droit, la couche conductrice 12.

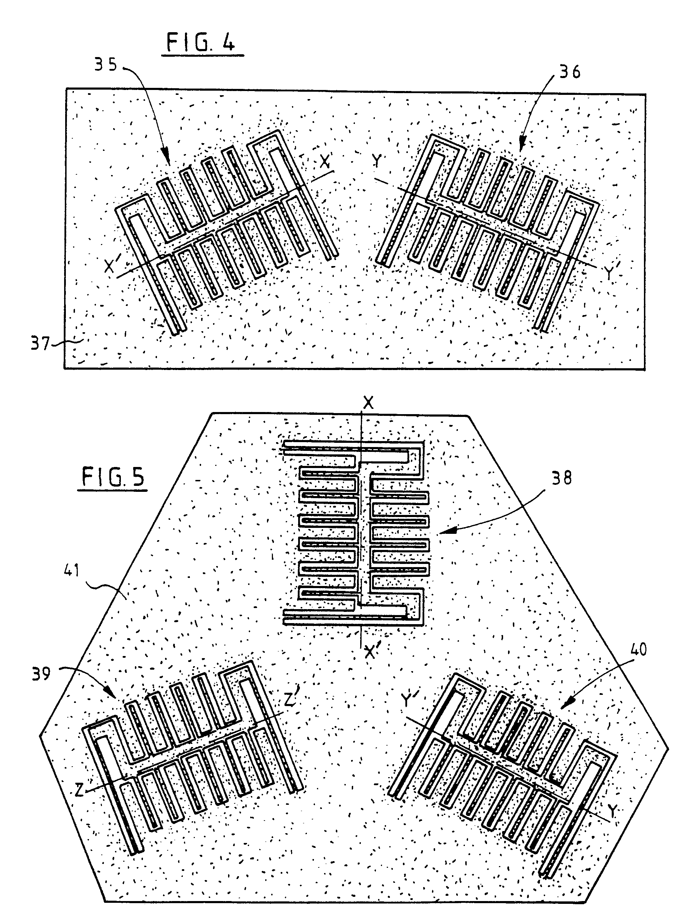

Les tranches des dents fixes portent chacune une métallisation 16, 17 formant, avec la métallisation 14, 15 de la tranche d'une dent mobile en vis-à-vis, un condensateur plan. Cette métallisation vient légèrement en retour sur au moins l'une des faces latérales de la dent en formant ainsi une plage de connexion 18a, 18b - 19a, 19b qui se prolonge sur la partie fixe du substrat où elle peut être connectée au circuit électronique de l'accéléromètre. Grâce à ses métallisations, chacune des dents mobiles 5a à 5f, 6a à 6d forme avec les tranches métallisées 16, 17 des deux dents fixes 9a à 9g, 10a à 10e qui lui font face, un double condensateur dont le schéma électrique est représenté sur la figure 3.

Sur celle-ci, on a simplement indiqué une armature mobile 20 suspendue à l'intérieur d'un boîtier 21 par un dispositif de suspension 22 et, de part et d'autre et à égale distance de cette armature mobile 20, deux armatures fixes 23, 24. L'armature mobile 20 correspond aux tranches métallisées 14, 15 des dents portées par la poutre 3, tandis que les deux armatures fixes 24, 25 correspondent aux métallisations 16, 17 des tranches des dents 9a à 9g, 10a à 10e réalisées dans la partie fixe du substrat.

Les capacités des deux condensateurs $C_1$, $C_2$ formés par l'armature mobile 20 et les deux armatures fixes 23, 24 sont données par les relations:

FIG00/40

dans lesquelles
e est l'entrefer moyen des deux condensateurs,
x est le déplacement relatif de l'armature mobile,
$C_0$ est la valeur de la capacité des deux condensateurs pour x = 0.

Il apparaît clairement tout d'abord qu'en mesurant la capacité $C_1$ ou $C_2$, il est possible d'obtenir facilement la valeur du déplacement x.

Par ailleurs, la force de rappel $F_R$ obtenue par l'application d'une tension $V_0$ sur l'armature mobile 20, d'une tension $V_1$ sur l'armature fixe 24 et d'une tension $V_2$ sur l'armature fixe 23, est obtenue par la relation:

$$F_R = \frac{\varepsilon_0}{2} S \left[\frac{(V_1 - V_0)^2}{(e-x)^2} - \frac{(V_2 - V_0)^2}{(e + x)^2}\right]$$

dans laquelle $\varepsilon_0$ est la constante diélectrique, et S est la surface des métallisations en regard.

Comme précédemment mentionné, la mesure de l'accélération à l'aide d'une telle structure peut s'effectuer selon les deux solutions suivantes:

La première solution consiste à asservir les tensions $V_1 - V_0$ et $V_2 - V_0$, de telle sorte que:

$$V_1 - V_0 = k (e - x)$$
$$V_2 - V_0 = k (e + x)$$

Dans ce cas, la force de rappel créée par les tensions $V_0$, $V_1$ et $V_2$ est nulle et l'écart $V_2 - V_1$ est proportionnel à l'écart de position de la masse mobile 20. Cet écart de position étant proportionnel à l'accélération apparente, on réalise donc une mesure en boucle ouverte de cette accélération.

La deuxième solution consiste à asservir la masse mobile en position, grâce aux tensions $V_0$, $V_1$, $V_2$. La force $F_R$ nécessaire est alors proportionnelle à l'accélération apparente. Un moyen de la mesurer est d'asservir $V_0$ et $V_2$ avec

$$V_0 = \text{constante}$$
$$V_2 = - V_1$$

ce qui donne:

$$F_R = KV_1 V_0 = K'V_1$$

K étant une constante et $K' = KV_0$

La mesure ne dépend alors plus de l'élasticité du substrat. En pratique, il faut, soit utiliser deux systèmes de capacités indépendantes, une pour la détection de la position par mesure capacitive, l'autre pour le rappel, soit utiliser des tensions $V_i$ comprenant une composante continue responsable du rappel et une composante alternative de faible amplitude ou d'amplitude contrôlée permettant la détection de position.

Ainsi, sur la figure 3, on a également représenté, en traits interrompus, un système de capacité indépendante comprenant une armature fixe 30 et une armature mobile 31 solidaire en mouvement de l'armature 20. Les armatures 30 et 31 sont respectivement portées à des tensions $V_3$ $V_4$ et sont connectées à un bloc de mesure 32 des déplacements x. De même, les armatures $V_1$, $V_2$ et $V_0$ sont connectées à un circuit d'asservissement (bloc 33). Les deux blocs 32 et 33 sont eux-mêmes reliés à un circuit de mesure de l'accélération apparente (bloc 34).

Il est avantageux, pour des raisons de coût, de performances et d'encombrement, d'usiner simultanément deux structures de détection 35, 36 sur le même substrat 37. Le calage angulaire relatif des deux axes sensibles dans le plan du substrat est alors particulièrement stable en température.

Dans le cas du quartz α coupe Z, la structure du cristal est mise à profit par la disposition (figure 4) où les deux axes sensibles XX', YY' font, entre eux, un angle de 120°. Deux sommes pondérées des sorties de chaque structure donnent alors des accélérations apparentes selon deux axes orthogonaux contenus dans le plan du substrat.

D'autre part, toujours dans le cas particulier où l'on utilise du quartz α, l'image de trois structures 38, 39, 40 ayant des axes sensibles X, X' - Y, Y' - Z, Z' à 120° l'un de l'autre dans le même substrat (figure 5) permet, moyennant une augmentation faible de l'encombrement et du coût, d'obtenir une redondance améliorant la fiabilité et la testabilité fonctionnelle.

Un tel type de structure est particulièrement adapté aux applications de type inclinomètre pour lesquelles on cherche à mesurer les composantes de l'accélération apparente sur un plan donné.

## Revendications

1. Accéléromètre utilisant au moins un capteur accélérométrique à structure pendulaire comprenant une partie fixe présentant au moins une armature fixe de condensateur, une masse mobile plate (3) suspendue à la partie fixe par l'intermédiaire de deux lames minces parallèles (4, 5) situées de part et d'autre de ladite masse, cette masse mobile portant au moins une armature mobile de condensateur en regard de l'armature fixe et des moyens permettant d'appliquer une tension sur lesdites électrodes de manière à engendrer, sur la masse mobile, une force de rappel électrostatique, caractérisé en ce que la structure pendulaire est plane, monobloc et est réalisée par micro-usinage d'un substrat consistant en une fine plaquette de monocristal, en ce que ladite masse mobile (3) comprend, sur au moins une portion de sa tranche, une métallisation constituant ladite armature mobile (14, 15), en ce que ladite partie fixe comprend, sur au moins deux portions distinctes de sa tranche, deux métallisations respectives constituant deux armatures fixes de condensateur (16, 17) disposées de part et d'autre de l'armature mobile (14, 15), et en ce que l'armature mobile (14, 15) est portée à une première tension $V_0$, tandis que les armatures fixes sont respectivement portées à une deuxième et une troisième tensions $V_1$ et $V_2$ qui sont susceptibles d'engendrer la susdite force de rappel électrostatique $F_R$.

2. Accéléromètre selon la revendication 1, caractérisé en ce qu' il comprend:

- des moyens pour asservir l'écart $(V_1 - V_0)$ entre la deuxième et la première tensions et l'écart $(V_2 - V_0)$ entre la troisième et la première tensions, de telle manière que:

$$V_1 - V_0 = k (e - x)$$
$$V_2 - V_0 = k (e + x)$$

expressions dans lesquelles e est la distance moyenne entre l'armature mobile (20) et les armatures fixes (23, 24), x est le déplacement relatif de la masse mobile et k est une valeur constante; et

- des moyens pour mesurer l'écart de tension $V_2$ - $V_1$ qui est proportionnel à l'écart de position x de la masse mobile et, en conséquence, à l'accélération apparente en régime permanent.

3. Accéléromètre selon la revendication 1, caractérisé en ce qu'il comprend des moyens pour asservir la masse mobile (3) en position, grâce aux tensions $V_0$, $V_1$ et $V_2$ appliquées sur les armatures fixes (16, 17) et mobiles (14, 15) et pour mesurer la force de rappel nécessaire $F_R$ qui est proportionnelle à l'accélération apparente.

4. Accéléromètre selon la revendication 3, caractérisé en ce qu'il comprend, en plus de la susdite armature mobile (20) et des deux armatures fixes (23, 24), un système de capacité indépendante comprenant au moins un couple armature mobile (31) armature fixe (30) supplémentaire, pour la détection de position.

5. Accéléromètre selon la revendication 3, caractérisé en ce que les susdites première, seconde et troisième tensions $V_0$, $V_1$, $V_2$ comprennent une composante continue pour engendrer la force de rappel $F_R$ et une composante alternative de faible amplitude ou d'amplitude contrôlée pour la détection de position.

6. Accéléromètre selon l'une des revendications précédentes, caractérisé en ce que la susdite masse mobile comprend une poutre porteuse (3) qui porte une succession de dents mobiles (5a à 5f) et (6a à 6d) qui s'engagent dans des évidements de formes sensiblement complémentaires de la partie fixe du substrat qui délimitent une succession de dents fixes (9a à 9g) et (10a à 10e) s'intercalant entre les dents mobiles (5a à 5f) et (6a à 6d) de la poutre (3) et en ce que les tranches des dents mobiles qui sont métallisées forment, avec les tranches des dents fixes, également métallisées, des capacités dont la valeur varie directement avec le déplacement relatif de la poutre porteuse (3).

7. Accéléromètre biaxial, caractérisé en ce qu'il comprend deux accéléromètres (35, 36) selon l'une des revendications précédentes, formés sur un même substrat (37) et dont les axes sensibles X, X' et Y, Y' font un angle de 120°.

8. Accéléromètre triaxial, caractérisé en ce qu'il comprend trois accéléromètres (38, 39, 40) selon l'une des revendications 1 à 6, formés sur un même substrat (41), dont les axes forment entre eux des angles de 120°.

9. Accéléromètre selon l'une des revendications 7 et 8, caractérisé en ce que le susdit substrat (37, 41) consiste en une plaquette de quartz coupe Z.

## Patentansprüche

1. Beschleunigungsmesser, der mindestens einen Beschleunigungssensor mit pendelartigem Aufbau benutzt, der mindestens einen stationären Kondensatorbelag aufweist, eine flache, bewegliche Masse (3), die am stationären Teil mittels zwei parallelen dünnen, zu beiden Seiten der besagten Masse angeordneten Lamellen (4, 5) aufgehängt ist, wobei diese bewegliche Masse mindestens einen beweglichen Kondensatorbelag gegenüber dem stationären Belag trägt und Mittel, welche es ermöglichen, an besagte Elektroden eine Spannung anzulegen, um auf besagter beweglichen Masse eine elektrostatische Rückstellkraft zu erzeugen, dadurch gekennzeichnet, dass die pendelartige Struktur flach und aus einem Block ist und durch Mikrobearbeitung eines Substrats hergestellt wird, welches aus einem feinen Monokristallplättchen besteht, dass besagte bewegliche Masse (3) auf mindestens einem Abschnitt ihres Randes eine Metallisierung aufweist, welche besagten beweglichen Belag (14, 15) bildet, dass besagtes stationäres Teil auf mindestens zwei Abschnitten seines Randes zwei jeweilige Metallisierungen aufweist, die zwei stationäre Kondensatorbeläge (16, 17) bilden, welche zu beiden Seiten des beweglichen Belages (14, 15) angeordnet sind, dass der bewegliche Belag (14, 15) auf eine erste Spannung $V_0$ aufgeladen wird, während die stationären Beläge jeweils auf eine zweite und dritte Spannung $V_1$ und $V_2$ aufgeladen werden, welche besagte elektrostatische Rückstellkraft $F_R$ erzeugen.

2. Beschleunigungsmesser nach Anspruch 1, dadurch gekennzeichnet, dass er aufweist:

- Mittel zur Steuerung der Abweichung ($V_1$ - $V_0$) zwischen der zweiten und ersten Spannung und der Abweichung (($V_2$ - $V_0$) zwischen der dritten und ersten Spannung, sodass

$$V_1 - V_0 = k (e - x)$$
$$V_2 - V_0 = k (e + x)$$

Ausdrücke, in denen e der durchschnittliche Abstand zwischen dem beweglichen Belag (20) und den stationären Belägen (23, 24) ist, x die relative Verschiebung der beweglichen Masse und k ein konstanter Wert; und

- Mittel, um die Spannungsabweichung $V_2$ - $V_1$ zu messen, welche proportional ist zur Positionsabweichung x der beweglichen Masse und somit zur scheinbaren Beschleunigung bei Dauerbetrieb.

3. Beschleunigungsmesser nach Anspruch 1, dadurch gekennzeichnet, dass er Mittel zur Steuerung der Position der beweglichen Masse (3) aufweist, mittels der an die stationären (16, 17) und beweglichen (14, 15) Beläge angelegten Spannungen $V_0$, $V_1$, $V_2$ und zur Messung der nötigen Rückstellkraft $F_R$, die proportional zur scheinbaren Beschleunigung ist.

4. Beschleunigungsmesser nach Anspruch 3, dadurch gekennzeichnet, dass er, ausser dem besagten beweglichen Belag (20) und den beiden stationären Belägen (23, 24), ein unabhängiges Kapazitätssystem aufweist, mit mindestens einem zusätzlichen Paar beweglicher Belag (31) - stationärer Belag (31) zur Positionserfassung.

5. Beschleunigungsmesser nach Anspruch 3, dadurch gekennzeichnet, dass die besagten ersten, zweiten und dritten Spannungen $V_0$, $V_1$, $V_2$ eine Gleichstromkomponente zur Erzeugung der Rückstellkraft $F_R$ und eine Wechselstromkomponente schwacher oder gesteuerter Amplitude enthalten.

6. Beschleunigungsmesser nach einem der vorhergehenden Ansprüche, dadurch gekennzeichnet, dass besagte bewegliche Masse einen Trägerbalken (3) aufweist, welcher mit einer Reihe von beweglichen Zähnen (5a bis 5f) und (6a bis 6d) versehen ist, die in im wesentlichen komplementäre Aussparungen im stationären Teil des Substrats eingreifen, welche eine Reihe stationärer Zähne (9a bis 9g) und (10a bis 10e) begrenzen, die zwischen die beweglichen Zähne (5a bis 5f) und (6a bis 6d) des Balkens greifen und dass die Ränder der beweglichen Zähne, die metallisiert sind, mit den Rändern der stationären Zähne, die ebenfalls metallisiert sind, Kapazitäten bilden, deren Wert sich in direktem Verhältnis zur relativen Verschiebung des Trägerbalkens (3) ändert.

7. Zweiachsiger Beschleunigungsmesser, dadurch gekennzeichnet, dass er zwei Beschleunigungsmesser (35, 36) gemäss den vorhergehenden Ansprüchen aufweist, die auf dem gleichen Substrat ausgebildet sind und deren sensible Achsen X, X' und Y, Y' einen Winkel von 120° bilden.

8. Dreiachsiger Beschleunigungsmesser, dadurch gekennzeichnet, dass er drei auf dem gleichen Substrat (41) gebildete Beschleunigungsmesser (38, 39, 40) nach einem der Ansprüche 1 bis 6 aufweist, deren Achsen miteinander einen Winkel von 120° bilden.

9. Beschleunigungsmesser nach einem der Ansprüche 7 und 8, dadurch gekennzeichnet, dass besagtes Substrat (37, 41) aus einem Z-Schnitt α Quartzplättchen besteht.

**Claims**

1. An accelerometer using at least an accelerometric sensor with a pendular structure comprising a fixed part having at least a fixed capacitor plate, a flat movable mass (3) suspended from the fixed part by means of two thin parallel strips (4, 5) situated on each side of said mass, said mass carrying at least a movable capacitor plate opposite the fixed plate and means for applying a voltage to said electrodes so as to generate, on said movable mass, an electrostatic recall force, characterized in that the pendular structure is a flat, monoblock structure and formed by micromachining a substrate formed of a fine monocrystal wafer, in that said movable mass (3) comprises, on at least part of its edge, a metallisation forming said movable plate (14, 15), in that said fixed part comprises, on at least two distinct portions of its edge, two respective metallisations forming two fixed capacitor plates (16, 17) disposed on each side of the movable plate (14, 15), in that the movable plate (14, 15) is brought to a first voltage $V_o$, whereas the fixed plates are respectively brought to a second and third voltage $V_1$ and $V_2$ which are capable of generating said electrostatic recall force $F_R$.

2. The accelerometer as claimed in claim 1, characterized in that it comprises:
- means for servocontrolling the deviation ($V_1$ - $V_0$) between the second and first voltages and the deviation ($V_2$ - $V_0$) between the third and first voltages so that:

$$V_1 - V_0 = k (e - x)$$
$$V_2 - V_0 = k (e + x)$$

in which expressions e is the mean distance between the mobile plate (20) and the fixed plates (23, 24), x is the relative movement of the mobile mass and k is a constant value ; and
- means for measuring the voltage deviation $V_2$ - $V_1$ which is proportional to the positional deviation x of the mobile mass and, consequently, to the apparent acceleration under permanent operating conditions.

3. The accelerometer as claimed in claim 1, characterized in that it comprises means for servocontrolling the position of the mobile mass (3) by means of the voltages $V_0$, $V_1$ and $V_2$ applied to the fixed (16, 17) and mobile (14, 15) plates and for measuring the return force required $F_R$ which is proportional to the apparent acceleration.

4. The accelerometer as claimed in claim 3, characterized in that it comprises, in addition to said mobile plate (20) and the two fixed plates (23, 24), an independent capacity system comprising at least one additional mobile plate ((31) - fixed plate (30) pair for position detection.

5. The accelerometer as claimed in claim 3, characterized in that said first, second and third voltages $V_0$, $V_1$, $V_2$ comprise a DC component for generating the return force $F_R$ and an AC component of low amplitude or controlled amplitude for the position detection.

6. The accelerometer as claimed in one of the preceding claims, characterized in that said mobile mass comprises a carrier beam (3) which carries a succession of mobile teeth (5a to 5f) and (6a to 6d) which engage in recesses of substantially complementary shapes in the fixed part of the substrate which define a succession of fixed teeth (9a to 9g) and (10a to 10e) inserted between the mobile teeth (5a to 5f) and (6a to 6d) of the beam (3), and in that the edges of the mobile teeth which are metallised form, with the edges of the fixed teeth, which are also metallised, capacities whose value varies directly with the relative movement of the carrier beam (3).

7. A two axis accelerometer, characterized in that it comprises two accelerometers (35, 36) such as claimed in one of the preceding claims, formed on the same substrate (37) and whose sensitive axes X, X′ and Y, Y′ form an angle of 120°.

8. A three axis accelerometer, characterized in that it comprises three accelerometers (38, 39, 40) as claimed in one of claims 1 to 6, formed on the same substrate (41), whose axes form therebetween angles of 120°.

9. The accelerometer as claimed in one of claims 7 and 8, characterized in that said substrate (37, 41) consists of a wafer of Z cut $\alpha$ quartz.

## FIG. 1

## FIG. 3

FIG. 2

EP 0 198 724 B1

## FIG. 4

## FIG.5